# EUROPEAN PATENT SPECIFICATION

(11) **EP 3 196 627 B1**
(45) Date of publication and mention of the grant of the patent: **15.05.2019**
(21) Application number: 15842121.4
(22) Date of filing: 25.08.2015
(51) Int. Cl.: G01M 13/04, F03D 7/02, G01M 99/00

(54) **ABNORMALITY DIAGNOSING APPARATUS FOR ROLLING BEARING, WIND TURBINE, AND ABNORMALITY DIAGNOSING METHOD FOR ROLLING BEARING**
VORRICHTUNG ZUR DIAGNOSE VON WÄLZLAGERANOMALIEN, WINDKRAFTGENERATOR UND VERFAHREN ZUR DIAGNOSE VON WÄLZLAGERFEHLERN
DISPOSITIF DE DIAGNOSTIC D'ANOMALIE DE PALIER À ROULEMENT, GÉNÉRATEUR D'ÉNERGIE ÉOLIENNE, ET PROCÉDÉ DE DIAGNOSTIC D'ANOMALIE DE PALIER À ROULEMENT

(30) Priority: 17.09.2014 JP 2014188892
(43) Date of publication of application: 26.07.2017
(73) Proprietor: NTN Corporation, Osaka-shi, Osaka 550-0003 (JP)
(72) Inventor: TSUTSUI, Hideyuki, Kuwana-shi Mie 511-0867 (JP); SAKAGUCHI, Tomoya, Kuwana-shi Mie 511-0867 (JP)
(74) Representative: Bockhorni & Brüntjen Partnerschaft Patentanwälte mbB
(86) International application number: PCT/JP2015/073814
(87) International publication number: WO 2016/042983

(56) References cited:
- WO-A1-2010/010421
- JP-A- 2005 345 277
- JP-A- 2006 153 554
- JP-A- 2006 153 554
- JP-A- 2009 270 913
- JP-A- 2012 172 623

## Description

### TECHNICAL FIELD

The present invention relates to an abnormality diagnosing apparatus for a rolling bearing, a wind turbine, and an abnormality diagnosing method for a rolling bearing, and particularly to an abnormality diagnosing technique for a rolling bearing provided in a main shaft, a gear box, a power generator and the like of the wind turbine.

### BACKGROUND ART

In a wind turbine, a main shaft connected to a blade receiving wind power is rotated, and the rotation speed of the main shaft is increased by a gear box to rotate a rotor of a power generator, thereby generating electric power. Each of the main shaft and the rotational shafts in the gear box and the power generator is rotatably supported by a rolling bearing. An abnormality diagnosing apparatus for diagnosing an abnormality of such a bearing is known.

There is a well-known abnormality diagnosing apparatus configured to carry out an abnormality diagnosis by detecting vibrations of a bearing using an acceleration sensor provided in the bearing (for example, see Japanese Patent Laying-Open Nos. 2006-105956, 2009-20090 and 2011-154020 (PTD 1 to PTD 3)). For example, Japanese Patent Laying-Open No. 2006-105956 (PTD 1) discloses an abnormality diagnosing apparatus for diagnosing an abnormality of a double row cylindrical roller bearing incorporated in a rolling bearing device for a railroad vehicle. This abnormality diagnosing apparatus includes: a driving motor configured to drive the double row cylindrical roller bearing so as to be rotated; and an acceleration sensor attached to a bearing box. During the inertial rotation of the double row cylindrical roller bearing in a prescribed rotational speed region while the driving motor is not conducting, an abnormality diagnosis for the double row cylindrical roller bearing is carried out based on the detected signal obtained by the acceleration sensor (see PTD 1).

JP-2009270913 discloses a method to accurately measure the clearance of a bearing by means of a displacement sensor for detecting the displacement of the outer ring.

### CITATION LIST

### PATENT DOCUMENT

PTD 1: Japanese Patent Laying-Open No. 2006-105956
PTD 2: Japanese Patent Laying-Open No. 2009-20090
PTD 3: Japanese Patent Laying-Open No. 2011-154020

### SUMMARY OF INVENTION

### TECHNICAL PROBLEM

In the case where various moving parts such as a gearbox and a motor are coupled to a rolling body supported by a bearing, an acceleration sensor, a vibration noise sensor or the like may exhibit an S/N ratio that is reduced by vibrations from the above-mentioned moving parts and vibrations caused by contact with the above-mentioned moving parts. Thus, abnormality detection for the bearing may become difficult or the logic for abnormality detection may become complicated.

Meanwhile, there is a known abnormality diagnosis carried out based on the displacement between an inner race and an outer race of a bearing. When the displacement between the inner race and the outer race is increased, the relative positional relation between the rolling body supported by the bearing and the components located adjacent thereto is changed, which may exert an influence upon the adjacent components. For example, when the displacement between the inner race and the outer race of the bearing is increased in the state where the main shaft supported by the bearing is coupled to a gearbox, a change occurs in a prescribed backlash provided between the gear integrally provided in the main shaft and the gear on the other side, which may lead to a faulty engagement therebetween. Accordingly, it is considered that the increase in displacement between the inner race and the outer race is greatly associated with the timing of replacement of the bearing. Thus, the abnormality diagnosis conducted based on the displacement between the inner race and the outer race is appropriate as a method for an abnormality diagnosis for a bearing.

In the case where an abnormality diagnosis for a bearing is carried out based on the displacement between the inner race and the outer race, such an abnormality diagnosis can be executed by making a comparison with the displacement amount obtained when the bearing is in the normal state immediately after installation of the equipment. This is because the damaged bearing increases an internal gap, so that the displacement amount between the inner race and the outer race is greatly different between when the bearing is in the normal state and when the bearing is in the abnormal state. In this case, the measured value of the displacement sensor for detecting a displacement may change between before and after maintenance or repair of the equipment. In other words, in accordance with such maintenance or repair, the installation states of the displacement sensor and the object to be measured are adjusted or the displacement sensor is calibrated, with the result that the measured value (absolute value) of the displacement sensor may change before and after maintenance or repair. Due to such a change in the measured value of the displacement sensor occurring before and after maintenance, the accuracy of the abnormality diagnosis carried out based on the displacement sensor may deteriorate.

The present invention has been made to solve the above-described problems. An object of the present invention is to provide an abnormality diagnosing apparatus for a rolling bearing, a wind turbine, and an abnormality diagnosing method for a rolling bearing, by which a highly accurate abnormality diagnosis can be implemented even when the installation states of the displacement sensor and the object to be measured are changed due to maintenance or repair.

### SOLUTION TO PROBLEM

According to the present invention, an abnormality diagnosing apparatus for a rolling bearing includes: a displacement sensor; and a diagnosis unit. The rolling bearing is formed of a ball bearing or a roller bearing having a contact angle. The displacement sensor is configured to detect a relative displacement between an inner race and an outer race of the rolling bearing. The diagnosis unit is configured to carry out an abnormality diagnosis for the rolling bearing based on a detected value of the displacement sensor. The diagnosis unit is configured to carry out the abnormality diagnosis based on a difference between the detected value of the displacement sensor under a first axial load condition for the rolling bearing and the detected value of the displacement sensor under a second axial load condition different from the first axial load condition.

According to this abnormality diagnosing apparatus, an abnormality diagnosis is carried out based on the difference between the detected values of the displacement sensor that are obtained under two different axial load conditions. Thus, the difference between the displacements under different load conditions is employed. Thereby, even if maintenance or the like for the equipment is conducted after collection of the normal state's data to be used as comparison data for carrying out an abnormality diagnosis, but if such maintenance or the like is not conducted between the measurements under different load conditions, the abnormality diagnosis results are hardly influenced by a change in the detected value of the displacement sensor that is caused by maintenance or the like. Also, in this abnormality diagnosing apparatus, two different load conditions can be readily set by using the axial load condition. For example, as to the main bearing of the wind turbine, there is a correlation between the rotation of the blade and the axial load of the main bearing. Thus, two different axial load conditions can be readily set based on the rotation condition of the blade. Therefore, according to this abnormality diagnosing apparatus, even if the installation states of the displacement sensor and the object to be measured are changed due to maintenance or repair, a highly accurate abnormality diagnosis can be implemented.

Preferably, the rolling bearing is used as a main bearing of a wind turbine. The first axial load condition and the second axial load condition are determined based on a power generation amount of the wind turbine.

Further preferably, the first axial load condition and the second axial load condition are determined based on a rotational speed of the rolling bearing.

Further preferably, the rolling bearing is used as a main bearing of a wind turbine. The first axial load condition is satisfied when rotation of a blade of the wind turbine is being stopped. The second axial load condition is satisfied when the wind turbine performs a rated operation.

Preferably, the displacement sensor is configured to detect the relative displacement between the inner race and the outer race in a rotational axis direction of the rolling bearing.

Also according to the present invention, a wind turbine includes: a blade configured to receive wind power; a main shaft connected to the blade; a power generator; a plurality of rolling bearings; and an abnormality diagnosing apparatus. The power generator is connected to the main shaft or a gear box for increasing a speed of rotation of the main shaft. Each of the plurality of rolling bearings is provided in a corresponding one of the main shaft, the gear box and the power generator. The abnormality diagnosing apparatus is configured to diagnose an abnormality of at least one of the plurality of rolling bearings. A target bearing as a target for an abnormality diagnosis carried out by the abnormality diagnosing apparatus is formed of a ball bearing or a roller bearing having a contact angle. The abnormality diagnosing apparatus includes a displacement sensor and a diagnosis unit. The displacement sensor is configured to detect a relative displacement between an inner race and an outer race of the target bearing. The diagnosis unit is configured to carry out an abnormality diagnosis for the target bearing based on a detected value of the displacement sensor. The diagnosis unit is configured to carry out the abnormality diagnosis based on a difference between the detected value of the displacement sensor under a first axial load condition for the target bearing and the detected value of the displacement sensor under a second axial load condition different from the first axial load condition.

Also, the present invention provides an abnormality diagnosing method for a rolling bearing formed of a ball bearing or a roller bearing having a contact angle. The abnormality diagnosing method includes: detecting a first displacement amount showing a relative displacement between an inner race and an outer race of the rolling bearing under a first axial load condition for the rolling bearing; detecting a second displacement amount showing the relative displacement under a second axial load condition different from the first axial load condition; and diagnosing an abnormality of the rolling bearing based on a difference between the first displacement amount and the second displacement amount.

### ADVANTAGEOUS EFFECTS OF INVENTION

According to the present invention, a highly accurate abnormality diagnosis can be implemented even if the installation states of a displacement sensor and an object to be measured are changed due to maintenance or repair.

### BRIEF DESCRIPTION OF DRAWINGS

Fig. 1 is a diagram schematically showing the configuration of a wind turbine to which an abnormality diagnosing apparatus for a rolling bearing according to an embodiment of the present invention is applied.
Fig. 2 is a diagram for illustrating an example of installation of a displacement sensor.
Fig. 3 is a diagram illustrating the relation between the axial load in a bearing and the origin shift amount in the rotational axis direction.
Fig. 4 is a flowchart illustrating a procedure for a normal-state data collecting process performed by a data processor.
Fig. 5 is a flowchart illustrating a procedure for an abnormality diagnosing process performed by the data processor.
Fig. 6 is a diagram illustrating the relation between the axial load in the bearing and the origin shift amount in the bearing radial direction.
Fig. 7 is a flowchart illustrating a procedure for an abnormality diagnosing process performed when it is determined based on the power generation amount of a power generator whether the axial load condition is satisfied or not.
Fig. 8 is a flowchart illustrating a procedure for an abnormality diagnosing process performed when it is determined based on the rotational speed of a main shaft whether the axial load condition is satisfied or not.

### DESCRIPTION OF EMBODIMENTS

The embodiments of the present invention will be hereinafter described with reference to the accompanying drawings. In the following description, the same or corresponding components will be designated by the same reference characters, and the detailed description thereof will not be repeated.

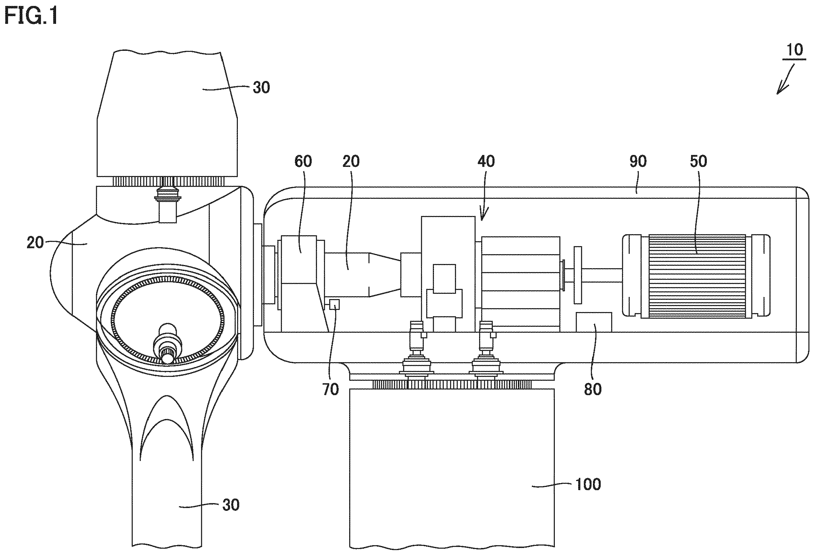

Fig. 1 is a diagram schematically showing the configuration of a wind turbine to which an abnormality diagnosing apparatus for a rolling bearing according to an embodiment of the present invention is applied. Referring to Fig. 1, a wind turbine 10 includes a main shaft 20, a blade 30, a gear box 40, a power generator 50, a bearing for the main shaft (which will be simply referred to as a "bearing") 60, a displacement sensor 70, and a data processor 80. Gear box 40, power generator 50, bearing 60, displacement sensor 70, and data processor 80 are housed in a nacelle 90 that is supported by a tower 100.

Main shaft 20 extends into nacelle 90 to be connected to an input shaft of gear box 40 and rotatably supported by bearing 60. Main shaft 20 transmits, to the input shaft of gear box 40, a rotational torque generated by blade 30 receiving wind power. Blade 30 is located at the foremost end of main shaft 20, converts the wind power into a rotational torque, and transmits it to main shaft 20.

Gear box 40 is provided between main shaft 20 and power generator 50 for increasing the rotational speed of main shaft 20 and outputting it to power generator 50. By way of example, gear box 40 is formed of a speed-up gear mechanism including a planetary gear, an intermediate shaft, and a high-speed shaft, for example. The inside of gear box 40 is also provided with a plurality of bearings rotatably supporting a plurality of shafts which, however, are not particularly shown. Power generator 50 is connected to an output shaft of gear box 40 for generating electric power with the rotational torque received from gear box 40. Power generator 50 is formed for example of an induction generator, but is not limited thereto. The inside of power generator 50 is also provided with a bearing rotatably supporting a rotor.

Bearing 60 is fixed in nacelle 90 and rotatably supports main shaft 20. Bearing 60 serves as a rolling bearing. In the present embodiment, bearing 60 is formed of a ball bearing or a roller bearing having a contact angle (a tapered roller bearing, a self-aligning roller bearing, and the like). It is to be noted that bearing 60 may be a single row type bearing or a double row type bearing.

Displacement sensor 70 serves as a sensor for detecting the relative displacement between the inner race and the outer race of bearing 60. Displacement sensor 70 is fixed in the housing of bearing 60 and configured to output the detected value to data processor 80.

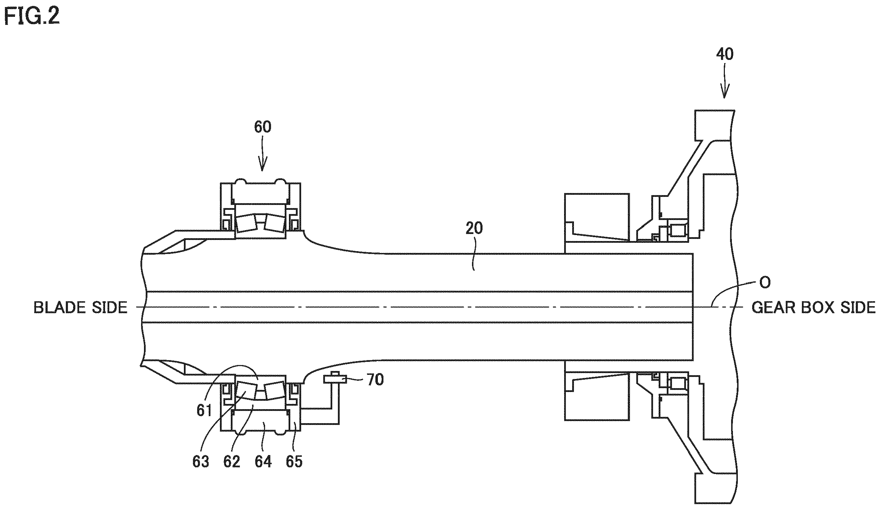

Fig. 2 is a diagram for illustrating an example of installation of displacement sensor 70. Referring to Fig. 2, displacement sensor 70 is fixedly provided in a side portion 65 of a housing 64 at which an outer race 62 (stationary ring) of bearing 60 is fixed. Also, displacement sensor 70 is arranged in proximity to main shaft 20. In this state, displacement sensor 70 measures the displacement of main shaft 20 in the direction along rotational axis O relative to housing 64 (side portion 65), thereby detecting the relative displacement of inner race 61 (rotational ring) in the rotational axis direction relative to outer race 62. Displacement sensor 70 is adjusted such that the displacement amount becomes 0 (zero) when rotation of main shaft 20 is being stopped (in other words, the axial load to bearing 60 is 0). Thus, displacement sensor 70 detects the displacement of main shaft 20 in the direction along rotational axis O that is caused by rotation of main shaft 20. For example, displacement sensor 70 is formed of a contactless type sensor such as an eddy-current type sensor or a contact type sensor, or formed of a video camera or the like.

Again referring to Fig. 1, data processor 80 is provided inside nacelle 90 and configured to receive the detected value from displacement sensor 70. As described above, the detected value from displacement sensor 70 shows a relative displacement between the inner race and the outer race of bearing 60 in the rotational axis direction. According to a program set in advance, data processor 80 carries out an abnormality diagnosis for bearing 60 based on the relative displacement in the rotational axis direction between the inner race and the outer race of bearing 60 by the method described later. It is noted that this data processor 80 corresponds to one example of the "diagnosis unit" in the present invention.

In the present wind turbine 10, when blade 30 is rotated by wind power, the axial load (the load in the rotational axis direction) is applied to bearing 60 supporting main shaft 20. Then, in the abnormality diagnosing apparatus according to the present embodiment, an abnormality diagnosis for bearing 60 is carried out based on the axial displacement between the inner race and the outer race occurring in bearing 60 in accordance with the axial load (based on the detected value of displacement sensor 70). Such an abnormality diagnosis for bearing 60 will be hereinafter described in detail.

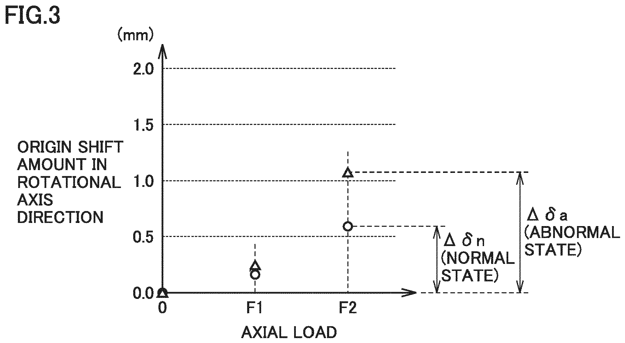

Fig. 3 is a diagram illustrating the relation between the axial load in bearing 60 and the origin shift amount in the rotational axis direction. Referring to Fig. 3, the horizontal axis shows the axial load in bearing 60. The axial load depends on the rotation of blade 30, and specifically depends on the power generation amount of power generator 50 that generates electric power with the rotation force received from blade 30, the rotational speed of main shaft 20, and the like. The axial load is 0, which means that the rotation of blade 30 is being stopped. The axial load is F2, which means that this wind turbine 10 performs a rated operation. The axial load is F1, which means that wind turbine 10 performs an operation corresponding to 50% of the rated operation.

The vertical axis shows the origin shift amount in the rotational axis direction. The origin shift amount in the rotational axis direction indicates the axial shift amount from the origin point of the central point of the inner race serving as a rotational ring (the intersection point of the central axis of the inner race and the axial center plane of the inner race) with reference to the central point of the outer race serving as a stationary ring (the intersection point of the central axis of the outer race and the axial center plane of the outer race) as an origin point. In other words, this origin shift amount in the rotational axis direction is detected by displacement sensor 70 (Figs. 1 and 2).

In the figure, circle marks indicate the data obtained when bearing 60 is in the normal state (for example, immediately after installation of wind turbine 10) while triangle marks indicate the data obtained when bearing 60 is in the abnormal state (bearing 60 is damaged). In both of the cases where bearing 60 is in the normal state and in the abnormal state, the origin shift amount in the rotational axis direction is increased as the axial load is increased. Furthermore, when the bearing is damaged, an internal gap becomes larger, so that the origin shift amount in the axis direction relative to the same axial load is greater in the abnormal state of bearing 60 than in the normal state of bearing 60. Thus, an abnormality diagnosis for bearing 60 can be carried out by comparing the origin shift amount in the axis direction under a certain axial load condition (for example, F2 in the figure) with the origin shift amount obtained when bearing 60 is in the normal state.

In this case, the origin shift amount in the axis direction is detected by displacement sensor 70, and the measured value of displacement sensor 70 may vary before and after maintenance or repair of the equipment. Specifically, in accordance with maintenance or repair of the equipment, the installation states of displacement sensor 70 and the object to be measured are adjusted or displacement sensor 70 is calibrated, with the result that the measured value (absolute value) of displacement sensor 70 may change before and after maintenance or repair. As the measured value of displacement sensor 70 changes before and after maintenance in this way, the accuracy of the abnormality diagnosis carried out based on displacement sensor 70 may deteriorate.

Thus, in the abnormality diagnosing apparatus according to the present embodiment, an abnormality diagnosis is carried out based on the difference between the detected values of displacement sensor 70 obtained under two different axial load conditions for bearing 60. Specifically, as to the difference between the detected value of displacement sensor 70 under a prescribed first axial load condition and the detected value of displacement sensor 70 under a prescribed second axial load condition different from the first axial load condition (this difference will be hereinafter also referred to as a "displacement difference"), the data in the diagnosis and the data in the normal state are compared with each other. For example, when the displacement difference in the diagnosis is k (k > 1) times higher than the displacement difference in the normal state, it is diagnosed that bearing 60 is in the abnormal state.

Specifically, for example, on the assumption that the axial load obtained when rotation of blade 30 is being stopped (= 0) is defined as the first axial load condition, and that the axial load obtained when wind turbine 10 performs a rated operation (for example, F2 in the figure) is defined as the second axial load condition, a displacement difference Δδn is calculated based on the detected values of displacement sensor 70 under the first and second axial load conditions immediately after installation of wind turbine 10 (before maintenance or repair), and this displacement difference Δδn is recorded as data obtained in the normal state. At the time of diagnosis of an abnormality (which may be after the maintenance), a displacement difference Δδ is again calculated based on the detected values of displacement sensor 70 under the first and second axial load conditions. Then, when this displacement difference Δδ is for example k times higher than displacement difference Δδn in the normal state, it is diagnosed that bearing 60 is in the abnormal state.

In this way, the difference (displacement difference) between the origin shift amounts in the rotational axis direction under two different axial load conditions is used. Thereby, unless maintenance or repair is conducted between measurements under two axial load conditions, the accuracy of the abnormality diagnosis is hardly influenced even if maintenance or repair is conduced after the data in the normal state has been collected.

Furthermore, in the abnormality diagnosing apparatus according to the present embodiment, the axial load is used as a load condition. The axial load depends on rotation of blade 30. Therefore, according to the present abnormality diagnosing apparatus, two different axial load conditions can be readily set as described above (when rotation of blade 30 is being stopped/during the rated operation).

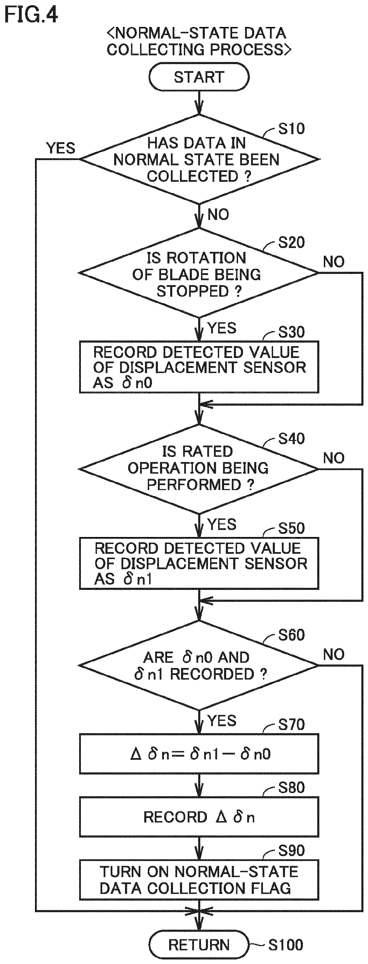

Fig. 4 is a flowchart illustrating a procedure for a normal-state data collecting process performed by data processor 80. The process shown in this flow chart is performed as it is called from a main routine and executed at regular intervals or every time predetermined conditions are satisfied.

Referring to Fig. 4, data processor 80 determines whether the data in the normal state that is to be compared with the data collected in the abnormality diagnosis has been collected or not (step S10). In this case, the determination as to whether the data has been collected or not is made based on a normal-state data collection flag (that is turned off during installation of the equipment and turned on in step S90 described later). When it is determined that the data has been collected (YES in step S10), data processor 80 advances the process to step S100 without performing a series of subsequent steps.

When it is determined in step S10 that the data has not been collected (NO in step S10), data processor 80 determines whether rotation of blade 30 is being stopped or not (step S20). This determination process is performed for determining whether the first axial load condition is satisfied or not.

When it is determined that rotation of blade 30 is being stopped (YES in step S20), it is determined that the first axial load condition is satisfied. Then, data processor 80 records the detected value of displacement sensor 70 as δn0 in a recording device (not shown, which will be hereinafter the same) (step S30). In addition, when it is determined in step S20 that blade 30 is being rotated (NO in step S20), the process in step S30 is not performed and the process is shifted to step S40.

Then, data processor 80 determines whether wind turbine 10 is performing a rated operation or not (step S40). This determination process is performed for determining whether the second axial load condition is satisfied or not. The determination as to whether the rated operation is being performed or not is made, for example, based on the power generation amount of power generator 50 and the rotational speed of blade 30 (main shaft 20).

When it is determined that wind turbine 10 is performing a rated operation (YES in step S40), it is determined that the second axial load condition is satisfied. Then, data processor 80 records the detected value of displacement sensor 70 as δn1 in the recording device (step S50). In addition, when it is determined in step S40 that the rated operation is not being performed (NO in step S40), the process in step S50 is not performed and the process is shifted to step S60.

Then, data processor 80 determines whether detected values δn0 and δn1 obtained by displacement sensor 70 are recorded in the recording device or not (step S60). If at least one of detected values δn0 and δn1 is not recorded (NO in step S60), a series of subsequent steps are not performed and the process is shifted to step S100.

When it is determined in step S60 that both of detected values δn0 and δn1 are recorded (YES in step S60), data processor 80 calculates a displacement difference Δδn showing the difference between detected value δn1 obtained under the second axial load condition and detected value δn0 obtained under the first axial load condition (step S70). Then, data processor 80 records displacement difference Δδn showing the data in the normal state in the recording device (step S80), and turns on a normal-state data collection flag (step S90).

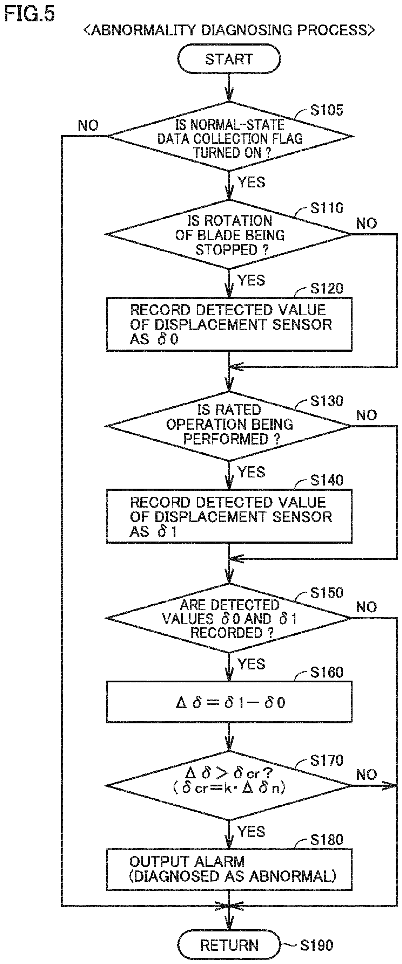

Fig. 5 is a flowchart illustrating a procedure for an abnormality diagnosing process performed by data processor 80. The process shown in this flow chart is also performed as it is called from a main routine and executed at regular intervals or every time predetermined conditions are satisfied.

Referring to Fig. 5, data processor 80 determines whether the normal-state data collection flag is turned on or not (step S105). When the normal-state data collection flag is turned off (NO in step S105), data processor 80 advances the process to step S190 without performing a series of subsequent steps.

When it is determined in step S105 that the normal-state data collection flag is turned on (YES in step S105), data processor 80 determines whether rotation of blade 30 is being stopped or not (step S110). When it is determined that rotation of blade 30 is being stopped (YES in step S110), it is determined that the first axial load condition is satisfied. Then, data processor 80 records the detected value of displacement sensor 70 as δ0 in the recording device (step S 120). In addition, when it is determined in step S110 that blade 30 is being rotated (NO in step S I 10), the process in step S120 is not performed and the process is shifted to step S130.

Then, data processor 80 determines whether wind turbine 10 is performing a rated operation or not (step S130). When it is determined that wind turbine 10 is performing a rated operation (YES in step S130), it is determined that the second axial load condition is satisfied. Then, data processor 80 records the detected value of displacement sensor 70 as δ1 in the recording device (step S140). In addition, when it is determined in step S130 that the rated operation is not being performed (NO in step S130), the process in step S140 is not performed and the process is shifted to step S150.

Then, data processor 80 determines whether detected values δ0 and δ1 obtained by displacement sensor 70 are recorded or not in the recording device (step S150). If at least one of detected values δ0 and δ1 is not recorded (NO in step S150), a series of subsequent steps are not performed and the process is shifted to step S190.

When it is determined in step S150 that both of detected values δ0 and δ1 are recorded (YES in step S150), data processor 80 calculates a displacement difference Δδ showing a difference between detected value δ1 under the second axial load condition and detected value δ0 under the first axial load condition (step S160).

Then, data processor 80 determines whether displacement difference Δδ calculated in step S160 is greater than a threshold value δcr or not (step S170). This threshold value δcr is used for determining whether bearing 60 is in the abnormal state or not, and for example, determined based on displacement difference Δδn showing the data in the normal state that is collected in the normal-state data collecting process shown in Fig. 4. By way of example, threshold value δcr is set to be k (k > 1) times higher than displacement difference Δδn in the normal state.

Then, when it is determined in step S170 that displacement difference Δδ is greater than threshold value δcr (YES in step S170), data processor 80 outputs an alarm indicating that the abnormality diagnosis result shows "abnormal" (step S180). On the other hand, when it is determined in step S170 that displacement difference Δδ is equal to or less than threshold value δcr (NO in step S170), data processor 80 advances the process to step S190 without performing the process in step S180.

As described above, in the present embodiment, an abnormality diagnosis is carried out based on the difference between the detected values of displacement sensor 70 under two different first and second axial load conditions. Thus, the difference between the displacements under the different axial load conditions is employed. Thereby, even if maintenance or the like of the equipment is performed after collection of the normal state's data to be used as comparison data for carrying out an abnormality diagnosis, but if such maintenance or the like is not performed between the measurements under different two load conditions, the abnormality diagnosis results are hardly influenced by a change in the detected value of displacement sensor 70 that is caused by maintenance or the like. Also, in the present abnormality diagnosing apparatus, two different load conditions can be readily set by using the axial load conditions. For example, in bearing 60 of wind turbine 10, there is a correlation between the rotation of blade 30 and the axial load of bearing 60, so that two different axial load conditions can be readily set based on the rotation condition of blade 30. Therefore, according to the present embodiment, a highly accurate abnormality diagnosis can be implemented even if the installation states of displacement sensor 70 and the object to be measured are changed due to maintenance, repair or the like.

### [Modification 1]

In the above-described embodiments, an abnormality diagnosis is carried out by comparing the displacement in the rotational axis direction between the inner race and the outer race of bearing 60 relative to the axial load with the data obtained when bearing 60 is in the normal state (Fig. 3). However, an abnormality diagnosis may be carried out by comparing the displacement in the bearing radial direction (the direction perpendicular to the rotational axis) between the inner race and the outer race relative to the axial load with the data obtained in the normal state.

Again referring to Fig. 2, in the present modification 1, displacement sensor 70 measures the displacement in the direction perpendicular to the rotational axis of main shaft 20 relative to housing 64 (side portion 65), thereby detecting the relative displacement of inner race 61 relative to outer race 62 in the bearing radial direction. Displacement sensor 70 is, for example, located vertically below main shaft 20 and serves to detect the displacement of main shaft 20 in the vertical direction that is caused by rotation of main shaft 20.

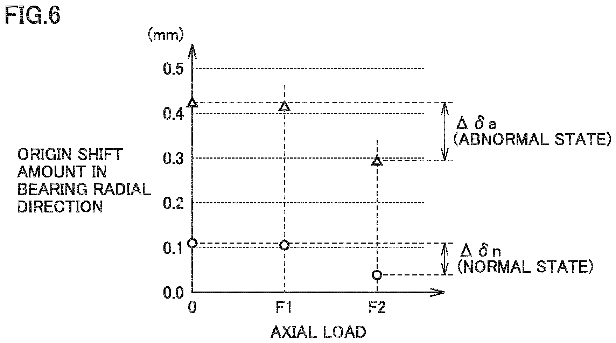

Fig. 6 is a diagram showing the relation between the axial load in bearing 60 and the origin shift amount in the bearing radial direction. Referring to Fig. 6, the horizontal axis shows the axial load in bearing 60. The vertical axis shows the origin shift amount of bearing 60 in the radial direction. In this case, the origin shift amount in the bearing radial direction shows the shift amount of the central axis of the inner race serving as a rotational ring in the vertically downward direction with reference to the central axis of the outer race serving as a stationary ring as an origin point.

In the figure, circle marks indicate the data obtained when bearing 60 is in the normal state while triangle marks indicate the data obtained when bearing 60 is in the abnormal state. Also in both of the cases where bearing 60 is in the normal state and in the abnormal state, the origin shift amount in the radial direction reaches a maximum value when the axial load is 0 (zero) (when rotation of main shaft 20 is being stopped), and then, the origin shift amount in the radial direction is decreased as the axial load is increased. In this case, when the bearing is damaged, the internal gap is increased. Accordingly, the origin shift amount in the radial direction under a relatively small axial load is greater than that obtained in the normal state. Also, the change in the origin shift amount relative to the increase in the axial load is greater than that in the normal state (Δδa (abnormal state) > Δδn (the normal state)).

Thus, as to the difference (displacement difference) between the origin shift amount in the radial direction under the prescribed first axial load condition (for example, load 0) and the origin shift amount in the radial direction under the prescribed second axial load condition (for example, F2 in the figure) different from the first axial load condition, displacement difference Δδ obtained in the diagnosis is compared with displacement difference Δδn obtained in the normal state. Then, for example, when displacement difference Δδ in the diagnosis is k (k > 1) times higher than displacement difference Δδn in the normal state, it may be diagnosed that bearing 60 is in the abnormal state.

In addition, when comparing Fig. 3 and Fig. 6, the difference between the origin shift amounts under different axial load conditions is greater in the rotational axis direction than in the bearing radial direction. Accordingly, it can be considered that a more accurate abnormality diagnosis can be done by the method of measuring the displacement in the rotational axis direction using displacement sensor 70 as compared with the method according to the present modification 1.

### [Modification 2]

According to the above-described embodiment, in the abnormality diagnosing process (Fig. 5) performed by data processor 80, the first axial load condition is satisfied when rotation of blade 30 is being stopped and the second axial load condition is satisfied when wind turbine 10 is performing a rated operation, but the first and second axial load conditions are not limited thereto. The axial load depends on rotation of blade 30 (as the wind power is larger, the rotation speed of blade 30 becomes higher and the axial load also becomes larger), and correlates with the rotational speed of main shaft 20 and the power generation amount of power generator 50 that generates electric power with the rotation force received from blade 30. Thus, it may be determined based on a power generation amount P of power generator 50 and a rotational speed N of main shaft 20 (blade 30) whether the prescribed axial load condition is satisfied or not.

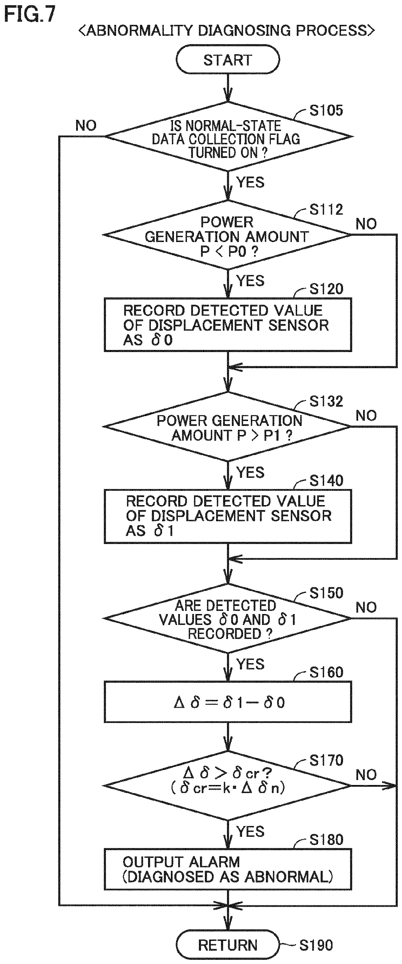

Fig. 7 is a flowchart illustrating a procedure for an abnormality diagnosing process performed when it is determined based on the power generation amount of power generator 50 whether the axial load condition is satisfied or not. The process shown in this flow chart is also performed as it is called from a main routine and executed at regular intervals or every time predetermined conditions are satisfied.

Referring to Fig. 7, this flowchart includes steps S112 and S132 in place of steps S110 and S130 in the flowchart shown in Fig. 5. In other words, when it is determined in step S105 that a normal-state data collection flag is turned on (YES in step S105), data processor 80 determines whether power generation amount P of power generator 50 is smaller than a threshold value P0 or not (step S112). This threshold value P0 is set at a value relatively smaller than the rated power generation amount of power generator 50, and for example, set to be approximately 10% to 20% of the rated power generation amount.

Then, when it is determined that power generation amount P is smaller than threshold value P0 (YES in step S112), it is determined that the first axial load condition is satisfied. Then, data processor 80 records the detected value of displacement sensor 70 as δ0 in the recording device (step S120).

Furthermore, data processor 80 determines whether power generation amount P of power generator 50 is greater than a threshold value P1 or not (step S132). This threshold value P1 is set at a value closer to the rated power generation amount of power generator 50, and for example, set to be approximately 80% to 90% of the rated power generation amount.

Then, when it is determined that power generation amount P is greater than threshold value P1 (YES in step S132), it is determined that the second axial load condition is satisfied. Then, data processor 80 records the detected value of displacement sensor 70 as δ1 in the recording device (step S140).

The processes other than the above are the same as those explained in the flowchart shown in Fig. 3.

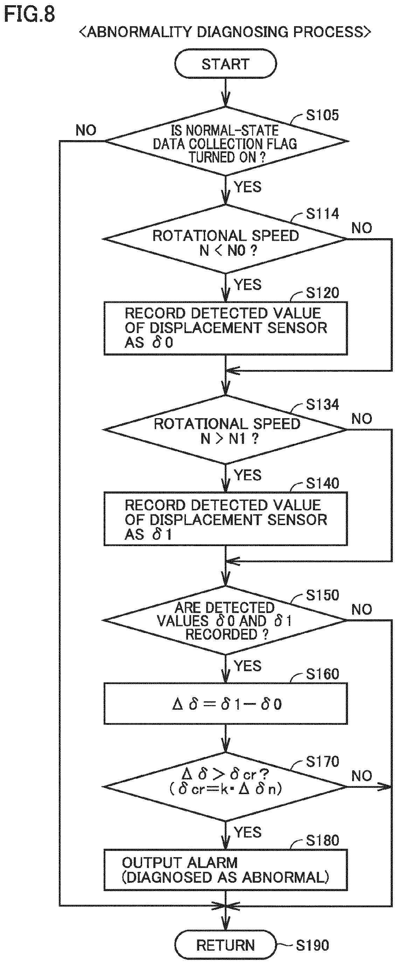

Furthermore, Fig. 8 is a flowchart illustrating a procedure for an abnormality diagnosing process performed when it is determined based on the rotational speed of main shaft 20 whether the axial load condition is satisfied or not. The process shown in this flow chart is also performed as it is called from a main routine and executed at regular intervals or every time predetermined conditions are satisfied.

Referring to Fig. 8, this flowchart includes steps S114 and S134 in place of steps S110 and S130 in the flowchart shown in Fig. 5. In other words, when it is determined in step S105 that the normal-state data collection flag is turned on (YES in step S105), data processor 80 determines whether rotational speed N of main shaft 20 is smaller than a threshold value NO or not (step S114). This threshold value NO is set at a value relatively smaller than the rated rotational speed of main shaft 20, and for example, set to be approximately 10% to 20% of the rated rotational speed.

Then, when it is determined that rotational speed N is smaller than threshold value NO (YES in step S114), it is determined that the first axial load condition is satisfied. Then, data processor 80 records the detected value of displacement sensor 70 as δ0 in the recording device (step S120).

Furthermore, data processor 80 determines whether rotational speed N of main shaft 20 is higher than a threshold value N1 or not (step S134). This threshold value N1 is set at a value closer to the rated rotational speed of main shaft 20, and for example, set to be approximately 80% to 90% of the rated rotational speed.

Then, when it is determined that rotational speed N is higher than threshold value N1 (YES in step S134), it is determined that the second axial load condition is satisfied. Then, data processor 80 records the detected value of displacement sensor 70 as δ1 in the recording device (step S140).

The processes other than the above are the same as those explained in the flowchart shown in Fig. 3.

In addition, in the above-described modification 2, an abnormality diagnosis may be carried out by detecting the displacement in the axial direction between the inner race and the outer race of bearing 60 by using displacement sensor 70, or an abnormality diagnosis may be carried out by detecting the displacement in the bearing radial direction between the inner race and the outer race of bearing 60 by using displacement sensor 70.

Also again referring to Fig. 1, in the above-described embodiments and modifications, displacement sensor 70 is attached to bearing 60 supporting main shaft 20 and configured to carry out an abnormality diagnosis for bearing 60. In addition to bearing 60 or in place of bearing 60, a bearing provided in gear box 40 or in power generator 50 is also provided with a displacement sensor, so that an abnormality diagnosis for this bearing provided in gear box 40 or power generator 50 can be carried out by the same method as those in the above-described embodiments or modifications.

Also, an explanation has been given in the above-described embodiments and modifications with regard to the case where the abnormality diagnosing apparatus for a rolling bearing according to the present invention is applied to a wind turbine, but the applicable scope for the present invention is not necessarily limited to the wind turbine.

Furthermore, the present invention does not exclude an abnormality diagnosis carried out using a vibration sensor such as an acceleration sensor. The abnormality diagnosis according to the present invention may be combined with the abnormality diagnosis carried out using a vibration sensor, so that a more accurate abnormality diagnosis can be achieved.

Each embodiment disclosed herein is also intended to be combined as appropriate and thereby implemented. It should be construed that the embodiments disclosed herein are by way of illustration in all respects, not by way of limitation. The scope of the present invention is defined by the terms of the claims, rather than the description of the embodiments provided above, and is intended to include any modifications within the meaning and scope equivalent to the terms of the claims.

### REFERENCE SIGNS LIST

10 wind turbine, 20 main shaft, 30 blade, 40 gear box, 50 power generator, 60 bearing, 61 inner race, 62 outer race, 63 roller, 64 housing, 65 side portion, 70 displacement sensor, 80 data processor, 90 nacelle, 100 tower.

## Claims

1. An abnormality diagnosing apparatus for a rolling bearing (60), the rolling bearing (60) being formed of a ball bearing or a roller bearing having a contact angle, the abnormality diagnosing apparatus comprising:
a displacement sensor (70) configured to detect a relative displacement between an inner race (61) and an outer race (62) of the rolling bearing (60); and
a diagnosis unit configured to carry out an abnormality diagnosis for the rolling bearing (60) based on a detected value of the displacement sensor (70),
**characterized in that**
the diagnosis unit is configured to carry out the abnormality diagnosis based on a difference between the detected value of the displacement sensor (70) under a first axial load condition for the rolling bearing (60) and the detected value of the displacement sensor (70) under a second axial load condition different from the first axial load condition.

2. The abnormality diagnosing apparatus for a rolling bearing (60) according to claim 1, wherein
the rolling bearing (60) is used as a main bearing of a wind turbine (10), and
the first axial load condition and the second axial load condition are determined based on a power generation amount of the wind turbine (10).

3. The abnormality diagnosing apparatus for a rolling bearing (60) according to claim 1, wherein the first axial load condition and the second axial load condition are determined based on a rotational speed of the rolling bearing (60).

4. The abnormality diagnosing apparatus for a rolling bearing (60) according to claim 1, wherein
the rolling bearing (60) is used as a main bearing of a wind turbine (10),
the first axial load condition is satisfied when rotation of a blade (30) of the wind turbine (10) is being stopped, and
the second axial load condition is satisfied when the wind turbine (10) performs a rated operation.

5. The abnormality diagnosing apparatus for a rolling bearing (60) according to any one of claims 1 to 4, wherein the displacement sensor (70) is configured to detect the relative displacement between the inner race (61) and the outer race (62) in a rotational axis direction of the rolling bearing (60).

6. A wind turbine (10) comprising:
a blade (30) configured to receive wind power;
a main shaft (20) connected to the blade (30);
a power generator (50) connected to the main shaft (20) or a gear box (40) for increasing a speed of rotation of the main shaft (20);
a plurality of rolling bearings (60) each provided in a corresponding one of the main shaft (20), the gear box (40) and the power generator (50); and
an abnormality diagnosing apparatus configured to diagnose an abnormality of at least one of the plurality of rolling bearings (60),
a target bearing as a target for an abnormality diagnosis carried out by the abnormality diagnosing apparatus being formed of a ball bearing or a roller bearing having a contact angle,
the abnormality diagnosing apparatus including:
a displacement sensor (70) configured to detect a relative displacement between an inner race (61) and an outer race (62) of the target bearing; and
a diagnosis unit configured to carry out an abnormality diagnosis for the target bearing based on a detected value of the displacement sensor (70),
**characterized in that**
the diagnosis unit is configured to carry out the abnormality diagnosis based on a difference between the detected value of the displacement sensor (70) under a first axial load condition for the target bearing and the detected value of the displacement sensor (70) under a second axial load condition different from the first axial load condition.

7. An abnormality diagnosing method for a rolling bearing (60), the rolling bearing (60) being formed of a ball bearing or a roller bearing having a contact angle, the abnormality diagnosing method **being characterized in** comprising:
detecting a first displacement amount showing a relative displacement between an inner race (61) and an outer race (62) of the rolling bearing (60) under a first axial load condition for the rolling bearing (60);
detecting a second displacement amount showing the relative displacement under a second axial load condition different from the first axial load condition; and
diagnosing an abnormality of the rolling bearing (60) based on a difference between the first displacement amount and the second displacement amount.

## Patentansprüche

1. Anomaliediagnosegerät für ein Wälzlager (60), wobei das Wälzlager (60) aus einem Kugellager oder einem Rollenlager mit einem Kontaktwinkel gebildet ist, wobei das Anomaliediagnosegerät umfasst:
einen Verschiebungssensor (70), der eingerichtet ist, eine Relatiwerschiebung zwischen einem Innenring (61) und einem Außenring (62) des Wälzlagers (60) zu erkennen; und
eine Diagnoseeinheit, die eingerichtet ist, eine Anomaliediagnose für das Wälzlager (60) basierend auf einem erkannten Wert des Verschiebungssensors (70) durchzuführen,
**dadurch gekennzeichnet, dass**
die Diagnoseeinheit eingerichtet ist, eine Anomaliediagnose basierend auf einem Unterschied zwischen dem erkannten Wert des Verschiebungssensors (70) unter einem ersten axialen Lastzustand für das Wälzlager (60) und dem erkannten Wert des Verschiebungssensors (70) unter einem zweiten axialen Lastzustand anders als dem ersten axialen Lastzustand durchzuführen.

2. Anomaliediagnosegerät für ein Wälzlager (60) nach Anspruch 1,
wobei
das Wälzlager (60) als ein Hauptlager einer Windturbine (10) verwendet wird, und
der erste axiale Lastzustand und der zweite axiale Lastzustand basierend auf einer durch die Windturbine (10) erzeugten Energiemenge bestimmt werden.

3. Anomaliediagnosegerät für ein Wälzlager (60) nach Anspruch 1, wobei der erste axiale Lastzustand und der zweite axiale Lastzustand basierend auf einer Umlaufgeschwindigkeit des Wälzlagers (60) bestimmt werden.

4. Anomaliediagnosegerät für ein Wälzlager (60) nach Anspruch 1, wobei
das Wälzlager (60) als ein Hauptlager einer Windturbine (10) verwendet wird,
der erste axiale Lastzustand erfüllt ist, wenn die Rotation eines Blatts (30) der Windturbine (10) gestoppt wird, und
der zweite axiale Lastzustand erfüllt ist, wenn die Windturbine (10) einen Nennbetrieb durchführt.

5. Anomaliediagnosegerät für ein Wälzlager (60) nach einem der Ansprüche 1 bis 4, wobei der Verschiebungssensor (70) eingerichtet ist, die Relatiwerschiebung zwischen dem Innenring (61) und dem Außenring (62) in einer Rotationsachsrichtung des Wälzlagers (60) zu erkennen.

6. Windturbine (10) umfassend:
ein Blatt (30), das eingerichtet ist, Windenergie aufzunehmen;
eine Hauptwelle (20), die mit dem Blatt (30) verbunden ist
einen Energieerzeuger (50), der mit der Hauptwelle (20) oder einer Schaltbox (40) verbunden ist, um eine Rotationsgeschwindigkeit der Hauptwelle (20) zu erhöhen;
eine Vielzahl Wälzlager (60), die jeweils entsprechend in einer Hauptwelle (30), einer Schaltbox (40) und dem Energieerzeuger (50) vorgesehen sind; und
ein Anomaliediagnosegerät, das eingerichtet ist, eine Anomalie von mindestens einer der Vielzahl von Wälzlagern (60) festzustellen,
ein Ziellager als ein Ziel für eine Anomaliediagnose, die durch das Anomaliediagnosegerät durchgeführt wird, welches aus einem Kugellager oder einem Rollenlager mit einem Kontaktwinkel gebildet ist,
wobei das Anomaliediagnosegerät enthält:
einen Verschiebungssensor (70), der eingerichtet ist, eine Relativverschiebung zwischen einem Innenring (61) und einem Außenring (62) des Ziellagers zu erkennen; und
eine Diagnoseeinheit, die eingerichtet ist, eine Anomaliediagnose für das Ziellager basierend auf einem erkannten Wert des Verschiebungssensors (70) durchzuführen,
**dadurch gekennzeichnet, dass**
die Diagnoseeinheit eingerichtet ist, eine Anomaliediagnose basierend auf einem Unterschied zwischen dem erkannten Wert des Verschiebungssensors (70) unter einem ersten axialen Lastzustand für das Ziellager und dem erkannten Wert des Verschiebungssensors (70) unter einem zweiten axialen Lastzustand anders als dem ersten axialen Lastzustand zu erkennen.

7. Anomaliediagnoseverfahren für ein Wälzlager (60), wobei das Wälzlager (60) aus einem Kugellager oder einem Rollenlager mit einem Kontaktwinkel gebildet ist, wobei das Anomaliediagnoseverfahren **dadurch gekennzeichnet ist, dass** es umfasst:
Erkennen einer ersten Verschiebegröße, die eine Relativverschiebung zwischen einem Innenring (61) und einem Außenring (62) des Wälzlagers (60) unter einem ersten axialen Lastzustand für das Wälzlager (60) anzeigt;
Erkennen einer zweiten Verschiebegröße, die eine Relativverschiebung unter einem zweiten Lastzustand anders als dem ersten Lastzustand anzeigt; und
Feststellen einer Anomalie des Wälzlagers (60), basierend auf einem Unterschied zwischen der ersten Verschiebegröße und der zweiten Verschiebegröße.

## Revendications

1. Appareil de diagnostic d'anomalie d'un palier (60), le palier (60) étant constitué d'un palier à billes ou d'un palier à rouleaux ayant un angle de contact, l'appareil de diagnostic d'anomalie comprenant :
un capteur de déplacement (70) conçu pour détecter un déplacement relatif entre un chemin de roulement intérieur (61) et un chemin de roulement extérieur (62) du palier (60) ; et
une unité de diagnostic conçue pour réaliser un diagnostic d'anomalie du palier (60) sur la base d'une valeur détectée du capteur de déplacement (70),
**caractérisé en ce que :**
l'unité de diagnostic est conçue pour réaliser le diagnostic d'anomalie sur la base d'une différence entre la valeur détectée du capteur de déplacement (70) sous une première condition de charge axiale du palier (60) et la valeur détectée du capteur de déplacement (70) sous une seconde condition de charge axiale, différente de la première condition de charge axiale.

2. Appareil de diagnostic d'anomalie d'un palier (60) selon la revendication 1,
dans lequel :
le palier (60) est utilisé en tant que palier principal d'une éolienne (10), et
la première condition de charge axiale et la seconde condition de charge axiale sont déterminées sur la base d'une quantité de production d'énergie de l'éolienne (10).

3. Appareil de diagnostic d'anomalie d'un palier (60) selon la revendication 1,
dans lequel la première condition de charge axiale et la seconde condition de charge axiale sont déterminées sur la base d'une vitesse de rotation du palier (60).

4. Appareil de diagnostic d'anomalie d'un palier (60) selon la revendication 1,
dans lequel :
le palier (60) est utilisé en tant que palier principal d'une éolienne (10),
la première condition de charge axiale est satisfaite lorsque la rotation d'une pale (30) de l'éolienne (10) est arrêtée, et
la seconde condition de charge axiale est satisfaite lorsque l'éolienne (10) assure un fonctionnement nominal.

5. Appareil de diagnostic d'anomalie d'un palier (60) selon l'une quelconque des revendications 1 à 4, dans lequel le capteur de déplacement (70) est conçu pour détecter le déplacement relatif entre le chemin de palier intérieur (61) et le chemin de palier extérieur (62) dans une direction d'axe de rotation du palier (60).

6. Éolienne (10) comprenant:
une pale (30) conçue pour recevoir de l'énergie éolienne ;
un arbre principal (20) relié à la pale (30) ;
un générateur électrique (50) relié à l'arbre principal (20) ou à un multiplicateur de vitesse (40) destiné à accroître une vitesse de rotation de l'arbre principal (20) ;
une pluralité de paliers (60) disposés chacun dans l'un correspondant parmi l'arbre principal (20), le multiplicateur de vitesse (40) et le générateur électrique (50) ; et
un appareil de diagnostic d'anomalie conçu pour diagnostiquer une anomalie d'au moins un palier de la pluralité de paliers (60),
un palier cible en tant que cible d'un diagnostic d'anomalie réalisé par l'appareil de diagnostic d'anomalie étant constitué d'un palier à billes ou d'un palier à rouleaux ayant un angle de contact,
l'appareil de diagnostic d'anomalie comprenant :
un capteur de déplacement (70) conçu pour détecter un déplacement relatif entre un chemin de roulement intérieur (61) et un chemin de roulement extérieur (62) du palier cible ; et
une unité de diagnostic conçue pour réaliser un diagnostic d'anomalie du palier cible, sur la base d'une valeur détectée du capteur de déplacement (70),
**caractérisée en ce que :**
l'unité de diagnostic est conçue pour réaliser le diagnostic d'anomalie sur la base d'une différence entre la valeur détectée du capteur de déplacement (70) sous une première condition de charge axiale du palier cible et la valeur détectée du capteur de déplacement (70) sous une seconde condition de charge axiale, différente de la première condition de charge axiale.

7. Procédé de diagnostic d'anomalie d'un palier (60), le palier (60) étant constitué d'un palier à billes ou d'un palier à rouleaux ayant un angle de contact, le procédé de diagnostic d'anomalie
**étant caractérisé en ce qu'il**
comprend les étapes suivantes :
détecter une première grandeur de déplacement représentant un déplacement relatif entre un chemin de palier intérieur (61) et un chemin de palier extérieur (62) du palier (60) sous une première condition de charge axiale du palier (60) ;
détecter une seconde grandeur de déplacement représentant le déplacement relatif sous une seconde condition de charge axiale, différente de la première condition de charge axiale ; et
diagnostiquer une anomalie du palier (60) sur la base d'une différence entre la première grandeur de déplacement et la seconde grandeur de déplacement.
